(19) Europäisches Patentamt
European Patent Office
Office européen des brevets

(11) **EP 3 410 720 A1**

(12) **EUROPEAN PATENT APPLICATION**

(43) Date of publication:
**05.12.2018 Bulletin 2018/49**

(21) Application number: **18173667.9**

(22) Date of filing: **22.05.2018**

(51) Int Cl.:
*H04N 19/54* (2014.01)   *H04N 19/543* (2014.01)
*H04N 19/46* (2014.01)   *G06K 9/34* (2006.01)
*G06K 9/46* (2006.01)   *G06T 7/11* (2017.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.05.2017 EP 17305623**

(71) Applicant: **THOMSON LICENSING**
**92130 Issy les Moulineaux (FR)**

(72) Inventors:
• BEGAINT, Jean
  35576 Cesson-Sévigné (FR)
• THOREAU, Dominique
  35576 Cesson-Sévigné (FR)
• GUILLOTEL, Philippe
  35576 Cesson-Sévigné (FR)
• GUILLEMOT, Christine
  35042 Rennes Cedex (FR)

(74) Representative: **Rolland, Sophie et al**
**InterDigital CE Patent Holdings**
**1-5, Rue Jeanne d'Arc**
**92130 Issy-les-Moulineaux (FR)**

(54) **METHOD AND DEVICE FOR PICTURE ENCODING AND DECODING**

(57)    A method for encoding for encoding a current image in an image set is disclosed that comprises accessing a reference image for the current image; determining at least one prediction image wherein a prediction image is obtained from a geometric transform applied to the reference image; said prediction image being a prediction for at least one region of current image; encoding the current image based on said at least a prediction image using block matching compensation of a coding standard; generating a bitstream comprising the encoded image, an item representative of the reference image and an item representative of the at least one geometric transform.

The determining of the at least a prediction image further comprises; for at least one super-pixel of the current image, determining a super-pixel geometric transform between a super-pixel of the current image and a super-pixel of the reference image based on feature points belonging to the super-pixel of the current image; determining the at least one region of current image used for prediction and a geometric transform by merging the super-pixel geometric transforms.

```
        ( Start )───S100
           │
           ▼
  accessing a current image Ic ───S110
  and a reference image Ir
           │
           ▼
  determining super-pixels for Ic ───S120
           │
           ▼
  determining a super-pixels geometric ───S130
  transform between Ic and Ir
           │
           ▼
  merging geometric transform and ───S140
  determining region for prediction
           │
           ▼
  determining pixel-wise parametric transform ───S150
           │
           ▼
  encoding Ic ───S160
           │
           ▼
        ( end )───S180
```

FIGURE 6

**Description**

## 1. TECHNICAL FIELD

The present principles generally relate to a method and a device for picture encoding and decoding, and more particularly, to a method and a device for encoding and decoding a current image in a set of images, wherein the set of images is a large collection of pictures that is usually referred to as big-data or cloud-based photo storage.

## 2. BACKGROUND ART

There is a rapid increase on the number of the images and photos uploaded to social networks (e.g., Facebook, Instagram, Flickr, etc.) in the last decade. If we assume that each such image or photo is typically JPEG compressed and covers 3MB space in the average, billions of such images need enormous number of high-capacity hard disks for the storage.

To exploit the similarities between photos from an album, alternative approaches to the one of independently encoding images with the classic JPEG codec were also considered. An approach disclosed by Shi et al. in "Photo album compression for cloud storage using local features," (in IEEE J. Emerg. Sel. Topics Circuits Syst., vol. 4, no. 1, pp. 17-28, 2014) encode a current image of a database using HEVC codec applied to at least a prediction image wherein a prediction image is obtained from a transformation applied to the reference image and a prediction image is a good prediction for at least one region of current image. The determination of transform relies on local feature descriptors analysis. Shi et al. introduced a three-step method to reduce inter-image redundancy. A feature-based multi-model approach is first used to reduce the geometric transformation between images. Then, a photometric transformation is applied to account for illumination changes between the references and the target image. Finally, a block matching compensation (BMC) is performed to compensate remaining local disparities. To evaluate the geometric transformation, a content-based features matching is first performed by using local feature descriptors responsive to scale-invariant feature transform (SIFT). The matching between images is performed based on the correlation between groups of descriptors instead of pixel values. A K-means algorithm is applied to cluster SIFT descriptors and organize the images into correlated sets. The images are placed in a graph, the weights being a distance based on matched SIFT descriptors. The prediction structure is obtained by converting the graph into a MST. The number of transformations and their parameters are then derived, and the geometric transformation is estimated via the RANSAC algorithm. This method outperforms JPEG by a factor of 10, while maintaining the same quality. Although good visual results and an impressive compression ratio, this technique might not reconstruct faithfully the original image in case of semi-local disparities due to the use of sparse local features and the absence of residual coding.

Recently, Zhang et al. presented in "Dense correspondence based prediction for image set compression" (in IEEE International Conference on Acoustics, Speech and Signal Processing, ICASSP, 2015, pp. 1240-1244), a novel prediction method based on dense correspondences. Zhang et al. disclosed to compensate geometric and photometric distortions on a $256 \times 256$ pixels blocks basis. By using dense pixel to pixel correspondences in local units instead of local descriptors, the parametric estimation of the geometric models and the luminance compensation is more robust to local disparities. However, a set of transformation parameters needs to be stored in the bit-stream as side information for each block. Furthermore, the fixed segmentation of the image implies that some unit may span over multiple planes or on a plane may span over multiple units, which would result in a less robust estimation of the transformation parameters and thus a less precise prediction.

A method that improve the image compression efficiency of large collection of images while exploiting semi-local correlations between images and respecting fast random access requirement and high-quality reconstruction quality is therefore desirable.

## 3. BRIEF SUMMARY

The present principles relate to a novel prediction scheme for cloud-based image compression. A salient idea to improve inter-image compression scheme is to efficiently compensate the semi-local geometric and photometric disparities by determining region partition responsive to super pixel partitioning. Advantageously, the present principles feature a semi-local geometric and optional photometric prediction method able to compensate in a region-wise manner distortions between two images. The present principles can significantly improve the rate-distortion performances compared to known image and video coding solutions, and is also competitive compared to state of the art methods. The added complexity of the present principles is limited and could be reduced by leveraging efficient implementation of the algorithms involved. Furthermore, the proposed prediction method is advantageously compatible with any video codec, allowing to use existing coding infrastructures without introducing major modifications.

A method for encoding a current image in an images set is disclosed that comprises

- accessing a reference image for the current image;
- determining at least one prediction image wherein a prediction image is obtained from a geometric transform applied to the reference image; said prediction image being a prediction for at least one region of current image;
- encoding the current image based on said at least a prediction image using block matching compensation of a coding standard;
- generating a bitstream comprising the encoded image, an item representative of the reference image and an item representative of the at least one geometric transform;

The determining of the at least a prediction image further comprises:

- for at least one super-pixel of the current image, determining a super-pixel geometric transform between a super-pixel of the current image and a super-pixel of the reference image based on feature points belonging to the super-pixel of the current image;
- determining the at least one region of current image used for prediction and a geometric transform by merging the super-pixel geometric transforms.

The method advantageously improves the compression efficiency of cloud based compression by proposing a fine compensation of semi-local disparities. Also, this method can be performed efficiently with a low computational overhead on the encoder and an even lower complexity on the decoder.

A device for encoding for encoding a current image in an image set is disclosed that comprises

- means for accessing a reference image for the current image;
- means for determining at least one prediction image wherein a prediction image is obtained from a geometric transform applied to the reference image; said prediction image being a prediction for at least one region of current image;
- means for encoding the current image based on said at least a prediction image using block matching compensation of a coding standard;
- means for generating a bitstream comprising the encoded image, an item representative of the reference image and an item representative of the at least one geometric transform.

The means for determining of the at least a prediction image further comprises:

- for at least one super-pixel of the current image, means for determining a super-pixel geometric transform between a super-pixel of the current image and a super-pixel of the reference image based on feature points belonging to the super-pixel of the current image;
- means for determining the at least one region of current image used for prediction and a geometric transform by merging the super-pixel geometric transforms.

In variant, an encoding device is disclosed that comprises a communication interface configured to access a current image, a reference image and at least one processor configured to:

- determine at least one prediction image wherein a prediction image is obtained from a geometric transform applied to the reference image; said prediction image being a prediction for at least one region of current image;
- encode the current image based on said at least a prediction image using block matching compensation of a coding standard;
- generate a bitstream comprising the encoded image, an item representative of the reference image and an item representative of the at least one geometric transform;

The processor being further configured to

- for at least one super-pixel of the current image, determine a super-pixel geometric transform between a super-pixel of the current image and a super-pixel of the reference image based on feature points belonging to the super-pixel of the current image;
- determine the at least one region of current image used for prediction and a geometric transform by merging the super-pixel geometric transforms.

A bitstream representative of a current image is disclosed that comprises:

- coded data representative of the encoded current image,
- coded data representative of the reference image and;
- coded data representative of the at least one geometric transform wherein the geometric transforms are obtained by determining a super-pixel geometric transform between a super-pixel of the current image and a super-pixel of the reference image based on feature points belonging to the super-pixel of the current image; and by determining the at least one region of current image used for prediction and the geometric transform by merging the super-pixel geometric transforms.

In a variant, a non-transitory processor readable medium having stored thereon a bitstream representative of a block of a picture is disclosed, wherein the bitstream comprises:

- coded data representative of the encoded current image,
- coded data representative of the reference image and;
- coded data representative of the at least one geometric transform wherein the geometric transforms are obtained by determining a super-pixel geometric transform between a super-pixel of the current image and a super-pixel of the reference image based on feature points belonging to the super-pixel of the current image; and by determining the at least one region of current image used for prediction and the geometric transform by merging the super-pixel geometric transforms.

A transmitting method is disclosed that comprises:

- transmitting coded data representative of the encoded current image,
- transmitting coded data representative of the reference image and;
- transmitting coded data representative of the at least one geometric transform wherein the geometric transforms are obtained by determining a super-pixel geometric transform between a super-pixel of the current image and a super-pixel of the reference image based on feature points belonging to the super-pixel of the current image; and by determining the at least one region of current image used for prediction and the geometric transform by merging the super-pixel geometric transforms.

A transmitting device is disclosed that comprises:

- means for transmitting coded data representative of the encoded current image,
- means for transmitting coded data representative of the reference image and;
- means for transmitting coded data representative of the at least one geometric transform wherein the geometric transforms are obtained by determining a super-pixel geometric transform between a super-pixel of the current image and a super-pixel of the reference image based on feature points belonging to the super-pixel of the current image; and by determining the at least one region of current image used for prediction and the geometric transform by merging the super-pixel geometric transforms.

A transmitting device is disclosed that comprises a communication interface configured to access a current image, a reference image and at least one processor configured to:

- transmit coded data representative of the encoded current image,
- transmit coded data representative of the reference image and;
- transmit coded data representative of the at least one geometric transform wherein the geometric transforms are obtained by determining a super-pixel geometric transform between a super-pixel of the current image and a super-pixel of the reference image based on feature points belonging to the super-pixel of the current image; and by determining the at least one region of current image used for prediction and the geometric transform by merging the super-pixel geometric transforms.

A computer program product comprising program code instructions to execute the disclosed method in any of its variant when this program is executed on a computer is also disclosed.
The following embodiments apply to the encoding method, encoding devices, bitstream, processor readable medium, transmitting method and transmitting devices disclosed above.
In a first specific and non-limiting embodiment, for each of the at least one region of current image, the method further comprises obtaining a pixel-wise parametric transform and the generated bitstream further comprises an item representative of the pixel-wise parametric transform. The pixel-wise parametric transform comprises functions such as a photometric transform, a denoising or super-resolution transform. Indeed, differences due to illumination and photometric distortions between pairs of correlated images are common in image sets. During the encoding, these disparities will result in a highly energetic residual, limiting the use of the predicted image by the encoder. The photometric compensation thus advantageously provides an accurate prediction for the encoding.

In a second specific and non-limiting embodiment, the method further comprises accessing a second reference image for the current image, wherein in the determining of at least one prediction image, a prediction image is further obtained from a geometric transform applied to the second reference image and wherein the item representative of the geometric transform in the generated bitstream further comprising an index of the reference image used for determining the geometric transform. Indeed, a plurality of refence images identified by an index are compatible with the present principles.

In a third specific and non-limiting embodiment, the disclosed method is compatible with a plurality of prediction images, that is not only one prediction image resulting from one transform applied to the reference image for the current image. In a variant, the number of prediction images ($I_{r,i}$) is adaptive and responsive to the merging of the super-pixel geometric transforms. In another variant, at least 2 prediction images are used.

## 4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder, e.g. a HEVC video encoder, adapted to execute the encoding method according to the present principles;
- Figure 3 represents an exemplary architecture of a receiver configured to decode a picture from a bitstream to obtain a decoded picture according to a specific and non-limiting embodiment;
- Figure 4 illustrates a block diagram of an exemplary video decoder, e.g. an HEVC video decoder, adapted to execute the decoding method according to the present principles;
- Figure 5 represents a flowchart of a method for predicting and encoding a current image in a bitstream according to the present principles;
- Figures 6 represent flowcharts of a method for encoding a picture in a bitstream according to a particular embodiment of the present principles;
- Figures 7 represent reference image $I_R$, prediction images $I_{r,i}$, and current image $I_C$ of a method for encoding a current image in a bitstream according to a particular embodiment of the present principles;
- Figures 8 represent successive images of region-based geometric estimation encoding a current image in a bitstream according to a particular embodiment of the present principles; and
- Figures 9 represent flowcharts of a method for decoding a picture in a bitstream according to a particular embodiment of the present principles.

## 5. DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

A picture is an array of luma samples in monochrome format or an array of luma samples and two corresponding arrays of chroma samples in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display. We may also use the terms "image," "picture," and "frame" interchangeably. We may also use the terms "sample," and "pixel" interchangeably.

Various embodiments are described with respect to the HEVC standard. However, the present principles are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a slice. They may be applied to encode/decode a whole picture or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

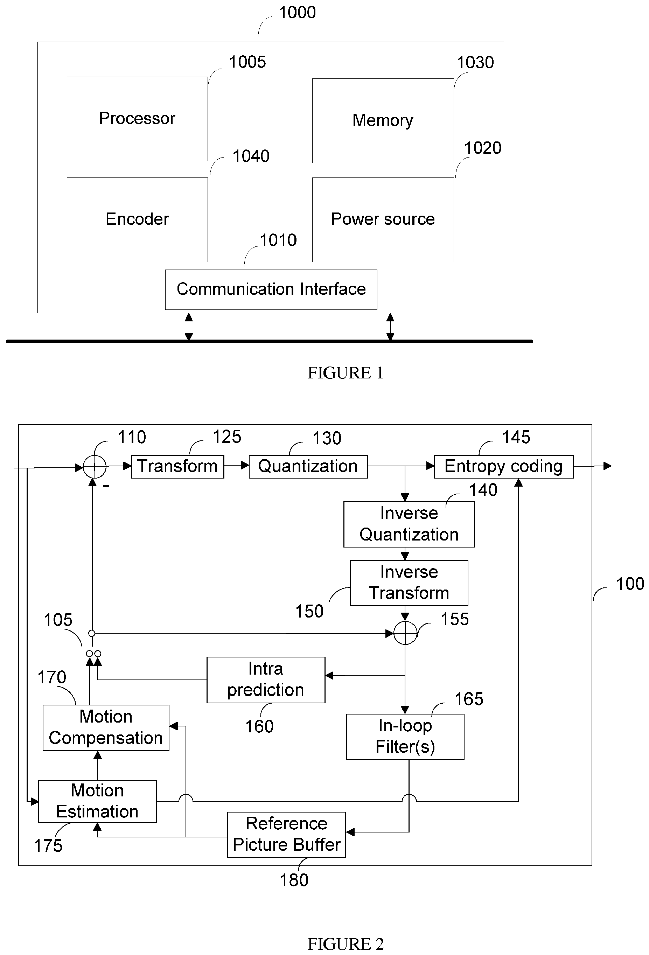

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.

The picture may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

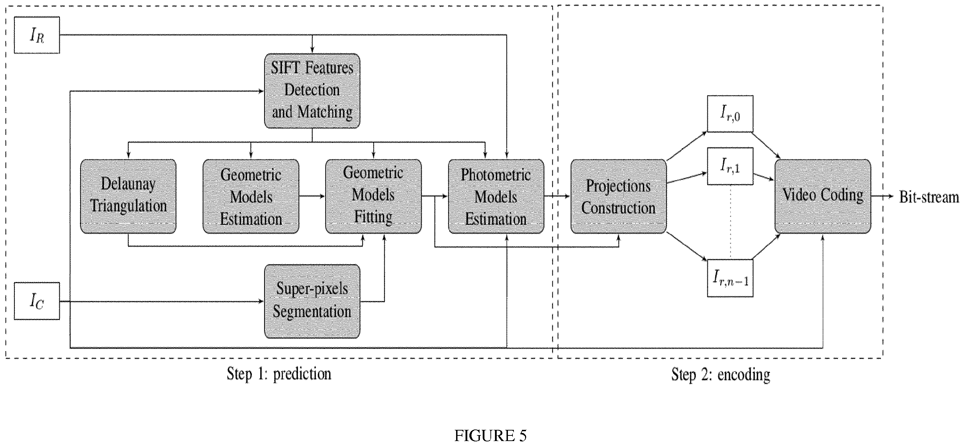

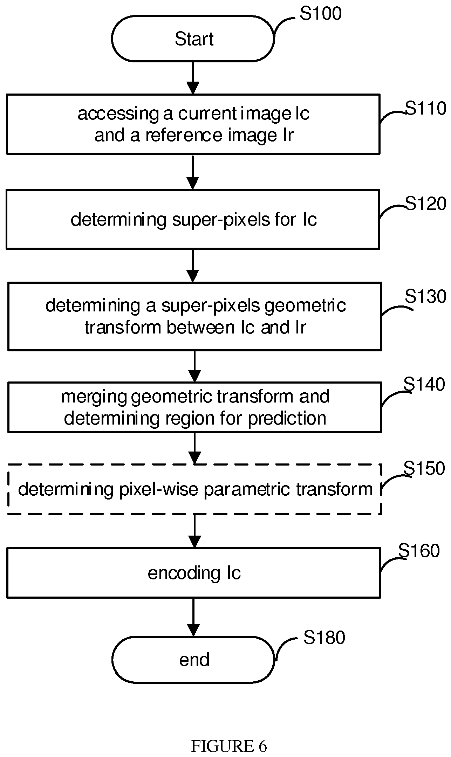

According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to Figures 5 and 6. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:

- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 2** illustrates an exemplary video encoder 100, e.g. a HEVC video encoder, adapted to execute the encoding method according to one of the embodiments of figures 5 or 6. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest CTB size 16x16 corresponds to a macroblock size as used in previous video coding standards. It will be understood that, although the terms CTU and CTB are used herein to describe encoding/decoding methods and encoding/decoding apparatus, these methods and apparatus should not be limited by these specific terms that may be worded differently (e.g. macroblock) in other standards such as H.264.

In HEVC, a CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted sample block (also known as a predictor) from the original picture block. The prediction sample block comprises prediction values, one for each sample of the block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference extends over two times the block size in horizontal and vertical direction using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed.
The motion information (i.e., motion vector and reference index) can be signaled in two methods, namely, "advanced motion vector prediction (AMVP)" and "merge mode". In AMVP, a video encoder or decoder assembles candidate lists based on motion vectors determined from already coded blocks. The video encoder then signals an index into the candidate lists to identify a motion vector predictor (MVP) and signals a motion vector difference (MVD). At the decoder side, the motion vector (MV) is reconstructed as MVP+MVD.

In the merge mode, a video encoder or decoder assembles a candidate list based on already coded blocks, and the video encoder signals an index for one of the candidates in the candidate list. At the decoder side, the motion vector and the reference picture index are reconstructed based on the signaled candidate.

In HEVC, the precision of the motion information for motion compensation is one quarter-sample for the luma component and one eighth-sample for the chroma components. A 7-tap or 8-tap interpolation filter is used for interpolation of fractional-sample sample positions, i.e., 1/4, 1/2 and 3/4 of full sample locations in both horizontal and vertical directions can be addressed for luma.

The residuals are transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted sample block. An in-loop filter (165) is applied to the reconstructed picture, for example, to perform deblocking/SAO (Sample Adaptive Offset) filtering to reduce coding artifacts. The filtered picture may be stored in a reference picture buffer (180) and used as reference for other pictures.

In HEVC, SAO filtering may be activated or de-activated at video level, slice level and CTB level. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the luma and chroma components, where the SAO mode is the same for Cb and Cr components. The SAO parameters (i.e. the offsets, the SAO types EO, BO and inactivated, the class in case of EO and the band position in case of BO) are configured individually for each color component.

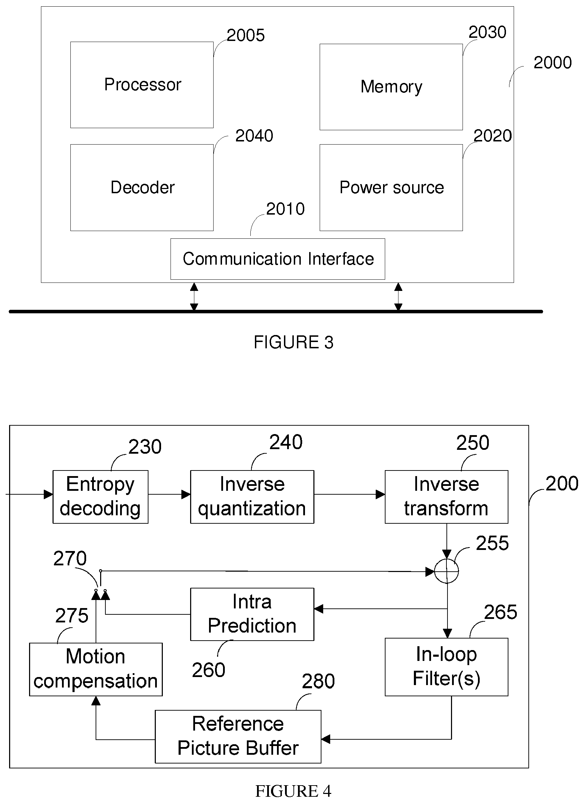

**Figure 3** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

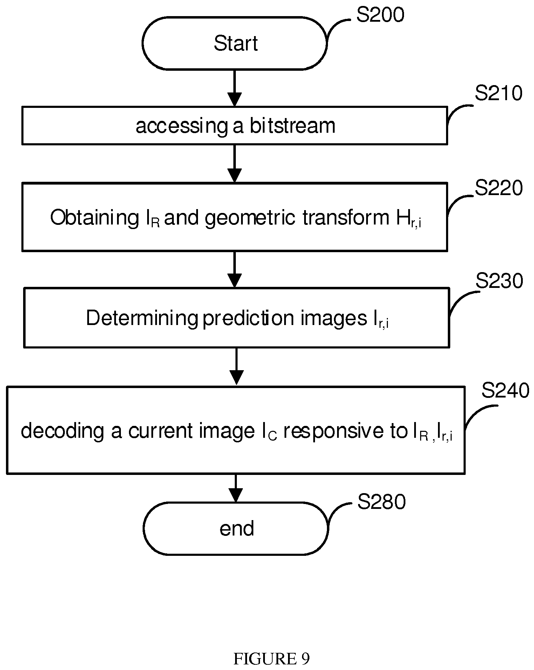

According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to Figure 9. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:

- a mobile device;
- a communication device;
- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 4** illustrates a block diagram of an exemplary video decoder 200, e.g. an HEVC video decoder, adapted to execute the decoding method according to one embodiment of figure 9. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted sample block (also known as a predictor) to obtain a decoded/reconstructed picture block. The predicted sample block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the reconstructed picture. The in-loop filter may comprise a deblocking filter and a SAO filter. The filtered picture is stored at a reference picture buffer (280).

**Figure 5** represents a flowchart of a method for predicting and encoding a current image in a bitstream according to the present principles. The present principles comprise two main steps belonging to the encoding method: a prediction step and an encoding step. For the purpose of explanation, we will only consider a pair of images but the present principles can also be adapted for larger sets of images. When considering the current image $I_C$ to be encoded, a reference image $I_R$ is first retrieved from the cloud with the help of a classical Content Based Image Retrieval (CBIR) system. Additional reference images $I_{r,i}$ are then constructed by exploiting geometric and pixel-wise parametric transformation models between the reference and the current images. The current image $I_C$ is finally encoded from the reference images $I_{r,i}$ with a video encoder such as HEVC. To decode $I_C$, the reference images $I_{r,i}$ are reconstructed from the reference image $I_R$ and the transformation models. The reference image thus needs to be available both at the encoder and the decoder sides. We assume that the reference image is retrieved from a large and static image database, and is referenced in the bit-stream.

The proposed prediction method relies on a semi-local approach which estimates region-based geometric and photometric models to better capture correlation between the two images. To segment the current image into homogeneous regions, in terms of geometric transformations, the image is first segmented into super-pixels. SIFT descriptors are then extracted from both images and matched exhaustively. For each super-pixel extracted from $I_C$, a projective transformation, i.e. a homography model, is estimated from the SIFT keypoints located inside the super-pixel boundaries. To reduce the number of homographies the estimated models are recursively re-estimated and fitted to the keypoints via the energy minimization method. The Delaunay triangulation of the keypoints is used to preserve the spatial coherence while assigning homographies. Then, the photometric disparities between $I_C$ and $I_R$ are compensated region-wise by estimating a transformation model between matched regions of the image pair. Multiple references $I_{r,i}$ are generated by warping each region using its assigned homographic model and applying the photometric compensation. Finally, the references are organized in a pseudo-sequence with the current image, to be differentially-encoded with classical video coding tools. The side information (SI), i.e. the homographies and the photometric model coefficients required to reconstruct the predictions on the decoder side, need to be transmitted and are taken into account in the bit-rate.

**Figure 6** represents a flowchart of a method for encoding a current image in a bitstream according to the present principles.

The method starts at step S100. At step S110, a transmitter 1000, e.g. such as the encoder 100, accesses a current image $I_C$ and a reference image $I_R$ for the current image $I_C$. At step S120, the transmitter determines a segmentation for $I_C$ into super-pixels, extracts SIFT key-points for both $I_C$ and $I_R$ and matched them.

At step S130, the transmitter determines, for at least a super-pixel, a geometric transform, being a homography model, is estimated from the SIFT keypoints belonging to the at least one super-pixel. At step 140, to reduce the number of estimated models, the geometric transforms for super-pixels are merged as well as corresponding super-pixels, thus region partition used in prediction responsive to $I_R$ is determined. In a nutshell, as described hereafter with regards to the geometric model fitting, an iterative optimization process reduces the number of geometric transforms while preserving the fidelity of the transforms. From the reduced set of transforms and the associated features points, the at least one region of current image are obtained.

The steps S130 and S140 may be repeated for each super-pixels or merged super-pixels of the current image in order to obtain at least one prediction image $I_{r,i}$ wherein a prediction image($I_{r,i}$ is obtained from a geometric transform $H_{r,i}$ applied to the reference image $I_r$; the prediction image $I_{r,i}$ being a prediction for at least one region of current image $I_C$. Thus the method is compatible with a plurality of prediction images, wherein each prediction image results from one transform applied to the reference image for the current image. In a variant, the number of prediction images ($I_{r,i}$) is adaptive and responsive to the merging of the super-pixel geometric transforms. In another variant, at least 2 prediction images are used.

In an optional refinement step 150, a pixel-wise parametric transform such as a photometric transform is also determined for each determined region of current image $I_C$.

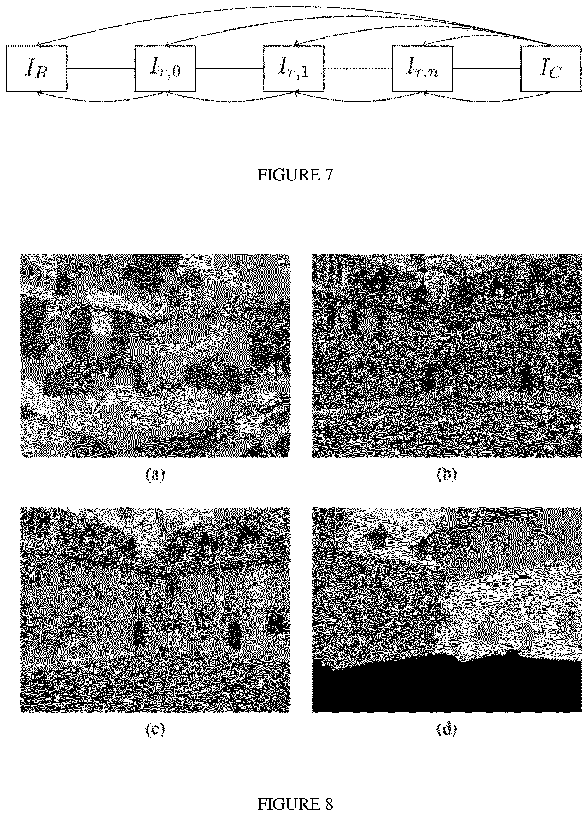

At step S160, the transmitter encodes the current image $I_C$ based on the prediction image $I_{r,i}$ as shown on figure 7. Encoding the encodes the current image $I_C$ usually but not necessarily comprises block matched compensation, obtaining residuals, transforming residuals into transform coefficients, quantizing the coefficients with a quantization step size QP to obtain a quantized coefficients and entropy coding the quantized coefficients in the bitstream.

The method ends at step S180.

According to a particular embodiment, a plurality of reference images are used in the encoding. The steps 110 to 140 are then repeated for each reference image, producing a plurality of prediction images responsive to geometric transform applied to one of the additional reference image. Then, in the step S160, the transmitter encodes the current image $I_C$ based on the plurality of prediction images $I_{r,i}$ based on any of the reference images. Accordingly, an item representative of the additional reference images $I_R$ as well as the corresponding geometric transform for generating prediction images are further included in the bitstream for the decoding.

A detailed embodiment of the method for encoding a current image in a bitstream according to the present principles is now described.

**Region-based prediction scheme**

**Super-pixel segmentation**

To initialize the region-based segmentation, a super-pixel segmentation is first performed via the SLIC algorithm proposed by Achanta et al. in. "SLIC superpixels compared to state-of-the-art superpixel methods," (in IEEE Trans. Pattern Anal. Mach. Intell., vol. 34, no. 11, pp. 2274-2282, 2012). All the pixels $i$ of $I_C$ are clustered according to a combined colorimetric and spatial distance $D(C_k, i)$ to a centroid $C_k$ defined as

$$D(C_k, i) = \sqrt{\left(\frac{d_c}{m_c}\right)^2 + \left(\frac{d_s}{m_s}\right)^2}$$

where $d_c$ represents the $l$2-norm in the LAB colorspace, $d_s$ the $l_2$ norm between a given pixel $i$ and a centroid $C_k$. The quantities $m_s$ and $m_c$ are weighting parameters used to normalize color and spatial proximity. Our scheme relies on the Adaptive-SLIC (ASLIC) variant of the SLIC algorithm, where $m_s$ and $m_c$ are updated at each iteration of the algorithm. When using SLIC, $m_s$ and $m_c$ are set to constant values, the assumed maximum colorimetric and spatial distance. Whereas with ASLIC, only the first iteration relies on fixed normalization parameters, they are then updated to the maximum distances observed in each cluster at the previous iteration. According to Achanta *et al.*, this decreases the boundary-recall performance. However, the super-pixels compactness parameter is highly dependent of the image content and its contrast. Thus, by using the adaptive version of the algorithm, no per-image tuning is required, since the initial parameters are updated along the iterations. An example of the resulting segmentation of the current image $I_C$ is shown in Figure 8a.

**Geometric model estimation**

To estimate the geometric models, our scheme relies on local feature descriptors as they are more robust to geometric distortion (*e.g.* translation, rotation, zoom, scale) and illumination variations than the pixel values.

SIFT keypoints are first extracted from both $I_C$ and $I_R$ and then matched exhaustively. In order to improve the matching, we use the RootSIFT algorithm proposed by Arandjelovic et al. in "Three things everyone should know to improve object retrieval," (in IEEE Conference on Computer Vision and Pattern Recognition, 2012). The computed SIFT descriptors $X_i$ are first projected into a feature space:

$$X_i' = \sqrt{\frac{X_i}{\|X_i\|_1}}, \forall i \in [\![1, N]\!]$$

$$with \ \|X_i\|_1 = \sum_{j=1}^{128} |X_i(j)| \tag{2}$$

then the distance between them is computed using the $l_2$ norm. For each super-pixel, a homography model $H$, defined by the matrix

$$H = \begin{bmatrix} s_x.\cos(\theta) & -s_y.\sin(\theta + \sigma) & t_x \\ s_x.\sin(\theta) & s_y.\cos(\theta + \sigma) & t_y \\ k_x & k_y & 1 \end{bmatrix} \quad (3)$$

is then estimated via the RANSAC algorithm (disclosed by M. A. Fischler and R. C. Bolles, in "Random sample consensus: A paradigm for model fitting with applications to image analysis and automated cartography," Commun. ACM, vol. 24, no. 6, pp. 381-395, 1981) from the matched keypoints contained within the super-pixel boundaries. Here $(t_x, t_y)$ denote the translation coefficients, $\theta$ the rotation, $(s_x, s_y)$ the scale parameters, $\sigma$ the shear, and $(k_x, k_y)$ the keystone distortion coefficients.

RANSAC is an iterative method which can estimate a parametric model from a noisy set of data points. There is no guarantee that the optimal solution will be found during the iterations. However, the probability of success is independent of the number of points in the data set and only relies on two parameters: the number of iterations $N$ and the residual threshold $t$ to discard an outlier. Let $u$ be the probability of a data point to be an outlier, the minimal number of iterations to reach a probability $p$ of finding the optimal solution is given by

$$N = \frac{\log(1 - p)}{\log(1 - u^m)} \quad (4)$$

where m is the minimum number of samples to estimate the parametric model. In the case of a homography model, $m$ = 4 (8 degrees of freedom).

To robustly estimate a homography model with RANSAC, the Symmetric Transfer Error (STE) from A. Harltey and A. Zisserman, in "Multiple view geometry in computer vision (2. ed.). Cambridge University Press, 2006. is used to compute the distances between matched keypoints:

$$STE(H_l) = \overbrace{\sum_{p \in P} d(x'_p, H_l.x_p)^2}^{\text{forward term}} + \overbrace{\sum_{p \in P} d(x_p, H_l^{-1}.x'_p)^2}^{\text{backward term}} \quad (5)$$

where $H_l$ denotes a homography model to be evaluated, $x_p$ and $x'_p$ two matched keypoints, and $d$ the euclidean distance. Since the STE takes into account both forward and backward projections of matched keypoints, this distance is well suited for real-world data where local feature detection and their matching will likely contain errors.

To further improve the estimation process, the determinant of the homography matrix is also used to discard invalid models. Thus, homographies not respecting the condition:

$$\mathcal{H} = \left\{ H_l \mid \frac{1}{k} \leq |\det(H_l)| \leq k \right\} \quad (6)$$

can be rejected as they correspond to degenerated cases, *i.e.* the absolute value of the determinant of the matrix (or its inverse) is close to zero. In a non-limiting example, we set $k$ to 10.

From the $n$ super-pixels of the SLIC segmentation, $m$ homography models are thus estimated, with $m \leq n$. Indeed, some super-pixels do not contain a sufficient number of matched keypoints to estimate a projective transform, or contain only outliers. Furthermore, the models attributed to neighboring super-pixels may be very similar as they might be part of the same region.

**Geometric model fitting**

From the previously estimated homography models, the most representative model for each region needs to be extracted and refined before generating the projections.

Delong et al. proposed in "Fast approximate energy minimization with label costs," (in International Journal of Computer Vision, vol. 96, no. 1, pp. 1-27, 2012) an efficient method to solve the issue of multiple models fitting. To solve this labelling problem, *i.e.* assigning a model to each keypoint, they introduce a new joint discrete energy:

$$E(f) = \overbrace{\sum_{p \in P} D_p(f_p)}^{\text{data cost}} + \overbrace{\sum_{(p,q) \in N} V_{pq}(f_p, f_q)}^{\text{smooth cost}} + \overbrace{\sum_{L \subseteq \mathcal{L}} h_L . \delta_L(f)}^{\text{label cost}} \quad (7)$$

to be minimized iteratively, where $N$ is the keypoints neighborhood, $h_L$ the label cost of the subset of labels $L$, and where the function $\delta_L(f)$ is defined as:

$$\delta_L(f) \triangleq \begin{cases} 1, & \exists p : f_p \in L \\ 0, & \text{otherwise} \end{cases} \quad (8)$$

Following the set-up described by H. N. Isack and Y. Boykov in "Energy-based geometric multi-model fitting," (in International Journal of Computer Vision, vol. 97, no. 2, pp. 123-147, 2012), an initial proposal for the homography models needs to be estimated from the matched keypoints, the observations $P$. During the expansion step, each keypoint $p$ is assigned a label $l$ from the set of homographies $L$ in order to minimize the objective function (7). From the labelling $f$, the set of models can then be updated (re-estimation step). The expansion and re-estimation steps are performed iteratively until convergence of the minimization of (7) or until a maximum number of iterations is reached.

In the set-up described in Delong *et al.* and Isack *et al.*, the set of initial homography models is randomly generated by selecting $N$ samples of 4 matches. In our approach, we use the models previously estimated from the super-pixels, which allows for a faster convergence and a more robust estimation. The set of homography models is then reduced and refined by recursively minimizing the energy (7).

The data cost is a fidelity term, which ensure that the model properly describes a transformation, computed from the STE (5). Due to the likely presence of outliers in the matches, an additional model $\phi$ is introduced to fit their distribution, with a fixed data cost for all the vertices and a label cost set to zero:

$$\begin{cases} h_\phi = 0 \\ D_p(\phi) = C, \text{with } C > 0 \end{cases} \quad (9)$$

The smooth cost for the set of neighbours $pq \in N$ is defined from the Delaunay triangulation of the matched keypoints in the current image $I_C$ as shown on figure 8b. It penalizes neighboring points with different labels in order to preserve spatial coherence and is defined as:

$$V_{pq} = w_{pq} \cdot \delta(f_p \neq f_q) \text{ with } \begin{cases} w_{pq}, & \text{weight for the vertex } pq \\ \delta, & \text{Kronecker delta} \end{cases} \quad (10)$$

The label cost (8) is used to restrict the number of models.

An example of the resulting labelling is shown in Figure 8c, where one can observe that several planes, or regions, of the image are detected successfully.

**Photometric compensation**

Once the finite set of homographies describing geometric transformations between image pairs has been determined, a reference image can be constructed. However, disparities due to illumination and photometric differences between the reconstructed image and the current image persist. During the encoding, these disparities will result in a highly energetic residual, limiting the use of the predicted image by the encoder.

To compensate these distortions, we further propose to estimate a photometric compensation model for each previously estimated region.

A scale-offset model is often proposed to minimize distortion on the Y channel. The model coefficients, $\alpha$ and $\beta$ are computed by minimizing the sum of square errors on the matched keypoint pixels:

$$\underset{\alpha,\beta}{\operatorname{argmin}} \sum_{P} |Y'(x'_p) - (\alpha.Y(x_p) + \beta)|^2 \tag{11}$$

This model can efficiently handle illumination disparities, but performs poorly on complex colorimetric disparities. We choose to add the more flexible model proposed by Hacohen et al. in "Optimizing color consistency in photo collections," (in ACM Trans. Graph., vol. 32, no. 4, pp. 38:1-38:10, 2013). The photometric deformation is modelled by a piecewise cubic spline *f* on each RGB channel. This model can compensate for a variety of photometric distortions such as gamma changes or color temperature. The minimization problem:

$$\underset{f}{\operatorname{argmin}} \quad \sum_{Q} |I'(x'_q) - f(I(x_q))|^2 + C_{soft}(f)$$

$$\text{subject to:} \quad C_{hard}(f) \tag{12}$$

is solved for 6 knots (0, 0.2, 0.4, 0.6, 0.8, 1) via quadratic programming. The same soft constraints ($C_{soft}$) and hard inequalities constraints ($C_{hard}$):

$$C_{soft}(f) = \lambda_1 \sum_{x \in \{0,1\}} |f(x) - x|^2$$
$$+ \lambda_2 \sum_{x \in \{0.2j-0.1\}_{j=1}^{5}} |f(x) - x|^2$$
$$+ \lambda_3 \sum_{x \in \{0.2j-0.1\}_{j=1}^{5}} |f''(x)|^2 \tag{13}$$

$$C_{hard}(f) = \begin{cases} 0.2 \leq f'(x) \leq 5, \forall x \in \{0.2j - 0.1\}_{j=1}^{5} \\ f(0) \leq 0 \end{cases} \tag{14}$$

are used to control smoothness and monotonicity of the curves. Hard equality constraints are also set on the 4 inner knots of the splines and their first derivative. Each curve thus has 7 degrees of freedom.

The minimization is performed for each region determined from the labelling. As we cannot rely on a dense correspondence field as in the original paper from Hacohen *et al.*, we use a set of pixels *Q* within a given radius of matched keypoints of each region, to ensure that only reliable pairs of pixels values are used.

Based on the distortion, we use the sum of absolute difference, the best performing photometric model is selected for each region during the prediction. The compensation can also be disabled when the image pair does not present any photometric distortions or the estimation fails. Advantageously, other pixel-wise compensation are compatible with the present principles such as a denoising algorithm or a super-resolution compensation.

**Pseudo-video sequence encoding**

Once the geometric and photometric models have been successfully estimated, the image can be segmented into regions at the pixel level. The region segmentation is computed by selecting the best projection for each super-pixel. The mean absolute error is used to measure the distortion for each super-pixel between a given projection and the current image. An example of the final segmentation is shown Figure 8d.

A prediction image $I_{r,i}$ can then be constructed from the reference frame $I_R$, the estimated models $H_{r,i}$ and the region segmentation. However, sending this segmentation map to reconstruct the prediction on the decoder side would be costly. Instead, multiple reference pictures are used.

Those $n$ additional references $I_{r,i}$ are constructed from the reference image $I_R$ and the region models. The reference image, the projections and the current image are then concatenated in a pseudo-video sequence, finally encoded with HEVC. Our encoding structure differs from the main HEVC profiles such as the low-delay and hierarchical configurations, as the last frame needs to be predicted from all the previous frames in the sequence in order to exploit fully the inter-redundancies.

Starting from the low-delay configuration, the GOP settings are modified to keep all the frames in the reference pictures buffer, as shown in Figure 7. The reference frames are encoded at maximum quality ($QP$ = 0), since this part of the bit-stream will not be stored in the final bit-stream, while the quality of the current frame is controlled via the *QPoffset* value.

To enable the decoder to reconstruct the projections used as reference pictures for the current image, some Side Information (SI) is also stored in the HEVC bit-stream. By using multiple reference frames, only the geometric and photometric models coefficients need to be transmitted. The encoder then performs its reference selection for each inter-coded prediction unit and store it in the bit-stream. This avoids sending the costly segmentation map, and lets the encoder decide the best reference frame to select for each prediction-unit, in the rate distortion optimization (RDO) loop. All the SI parameters are stored as half-precision floating point, coded on 16 bits each. For the homography models, 8 parameters needs to be stored in the bit-stream, 2 parameters for the scale-offset model or 7 parameters for each color channel for the piece-wise spline fitting model.

At the decoder side, the compensation parameters of each region are decoded from the bit-stream. The reference image can be retrieved from the database with the help of an index stored in the bit-stream. The additional references are then reconstructed for each region and the current image can be decoded.

**Figure 8** represents a flowchart of a method for decoding an image in a bitstream according to a first specific and non-limiting embodiment corresponding to the embodiment of the encoding method according to figure 6.

The method starts at step S200. At step S210, a receiver 2000 such as the decoder 200 accesses a bitstream.

At step S220, the receiver obtains the reference image $I_R$ and the geometric (and photometric) transform $H_{r,i}$ based on the information item of the bitstream.

At step S230, the receiver determines prediction images $I_{r,i}$ to by applying respective the geometric (and photometric) transform $H_{r,i}$ to the reference image $I_R$.

At step S240, the decoder decodes the current image $I_c$ based on the prediction images $H_{r,i}$ and the reference image $I_R$. Decoding usually but not necessarily comprises entropy decoding a portion of the bitstream representative of a block to obtain a block of transform coefficients, de-quantizing and inverse transforming the block of transform coefficients to obtain a block of residuals.

The method ends at step S280.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

**1.** A method for encoding a current image ($I_C$) in a set of images comprising:

- Accessing (S110) a reference image ($I_R$) for the current image ($I_C$);
- Determining at least one prediction image ($I_{r,i}$) wherein a prediction image ($I_{r,i}$) is obtained from a geometric transform ($H_{r,i}$) applied to the reference image ($I_R$); said prediction image ($I_{r,i}$) being a prediction for at least one region of current image ($C_c$);
- Encoding (S160) the current image ($I_C$) based on said at least a prediction image ($I_{r,i}$) using block matching compensation;
- Generating a bitstream comprising the encoded image, an item representative of the reference image ($I_R$) and an item representative of the at least one geometric transform ($H_{r,i}$);

the method being **characterized in that** determining the at least a prediction image ($I_{r,i}$) further comprising :

- for at least one super-pixel of the current image ($I_C$), determining (S130) a super-pixel geometric transform between a super-pixel of the current image ($I_C$) and a super-pixel of the reference image ($I_R$) based on feature points belonging to the super-pixel of the current image ($I_C$);
- determining (S140) the at least one region of current image ($I_C$) used for prediction and a geometric transform by merging the super-pixel geometric transforms.

**2.** The method of claim 1 further comprising for the of the at least one region of current image ($I_C$), obtaining a pixel-wise parametric transform and wherein the generated bitstream further comprises an item representative of the pixel-wise parametric transform ($H_{r,i}$).

**3.** The method of claim 1 further comprising

- accessing a second reference image for the current image ($I_C$),

- determining at least one prediction image ($I_{r,i}$) wherein a prediction image ($I_{r,i}$) is obtained from a geometric transform ($H_{r,i}$) applied to the second reference image and;
- wherein the item representative of the geometric transform ($H_{r,i}$) in the generated bitsream further comprises an index of the reference image or the second reference image used for the geometric transform ($H_{r,i}$).

4. The method of claim 1 wherein an adaptive number of prediction images ($I_{r,i}$) is used responsive to the merging of the super-pixel geometric transforms.

5. The method of claim 1 wherein at least 2 prediction images ($I_{r,i}$) are used in the encoding.

6. A device for encoding a current image ($I_C$) in a set of images comprising:

- Means for accessing a reference image ($R_r$) for the current image ($I_C$) among said image set;
- Means for determining at least one prediction image ($I_{r,i}$) wherein a prediction image ($I_{r,i}$) is obtained from a geometric transform ($H_{r,i}$) applied to the reference image ($I_R$); said prediction image ($I_{r,i}$) being a prediction for at least one region of current image ($I_C$);
- Means for encoding the current image ($I_C$) based on said at least a prediction image ($I_{r,i}$) using block matching compensation;
- Means for generating a bitstream comprising the encoded image, an item representative of the reference image ($I_R$) and an item representative of the at least one geometric transform ($H_{r,i}$);

the device being **characterized in that** the means for determining the at least a prediction image ($I_{r,i}$) further comprises:

- means for determining a super-pixel geometric transform between a super-pixel of the current image ($I_c$) and a super-pixel of the reference image ($I_r$) based on feature points belonging to the super-pixel of the current image ($I_c$);
- means for determining the at least one region of current image ($I_c$) used for prediction and a geometric transform by merging the super-pixel geometric transforms.

7. The device of claim 6 further comprising means for obtaining a pixel-wise parametric transform for each of the at least one region of current image ($I_C$), and wherein the generated bitstream further comprises an item representative of the pixel-wise parametric transform ($H_{r,i}$).

8. The device of any of claims 6 or 57 further comprising means for accessing a second reference image for the current image ($I_C$), and wherein in the means for determining at least one prediction image ($I_{r,i}$), a prediction image ($I_{r,i}$) is obtained from a geometric transform ($H_{r,i}$) applied to the second reference image ($I_r$) and the item representative of the geometric transform ($H_{r,i}$) in the generated bitstream further comprises an index of the reference image or the second refence image used for the geometric transform ($H_{r,i}$).

9. The device of any of claims 6-8 wherein an adaptive number of prediction images ($I_{r,i}$) is used responsive to the merging of the super-pixel geometric transforms.

10. The device of any of claims 6-8 wherein at least 2 prediction images ($I_{r,i}$) are used in the encoding.

11. A computer program product comprising program code instructions to execute the method of any of claims 1 to 6 when this program is executed on a computer.

1000

FIGURE 1

FIGURE 2

Processor 2005

Memory 2030

2000

Decoder 2040

Power source 2020

2010

Communication Interface

FIGURE 3

230 Entropy decoding

240 Inverse quantization

250 Inverse transform

200

255

270

275 Motion compensation

Intra Prediction

260

280 Reference Picture Buffer

265 In-loop Filter(s)

FIGURE 4

FIGURE 5

FIGURE 6

FIGURE 7

(a)  (b)

(c)  (d)

FIGURE 8

S200

Start

S210

accessing a bitstream

S220

Obtaining $I_R$ and geometric transform $H_{r,i}$

S230

Determining prediction images $I_{r,i}$

S240

decoding a current image $I_C$ responsive to $I_R$, $I_{r,i}$

S280

end

FIGURE 9

Europäisches
Patentamt

European
Patent Office

Office européen
des brevets

# EUROPEAN SEARCH REPORT

Application Number

EP 18 17 3667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | SHI ZHONGBO ET AL: "Photo Album Compression for Cloud Storage Using Local Features", IEEE JOURNAL ON EMERGING AND SELECTED TOPICS IN CIRCUITS AND SYSTEMS, IEEE, PISCATAWAY, NJ, USA, vol. 4, no. 1, 1 March 2014 (2014-03-01), pages 17-28, XP011542400, ISSN: 2156-3357, DOI: 10.1109/JETCAS.2014.2298291 [retrieved on 2014-03-07] * abstract * * sections III and V * | 1-11 | INV. H04N19/54 H04N19/543 H04N19/46 G06K9/34 G06K9/46 G06T7/11 |
| Y | KOUSUKE IMAMURA ET AL: "Automatic Moving Object Extraction Using X-means Clustering", PICTURE CODING SYMPOSIUM 2010; 8-12-2010 - 10-12-2010; NAGOYA,, 8 December 2010 (2010-12-08), XP030081975, * abstract * * section 3; figure 4 * | 1-11 | |
| A | NEUBERT PEER ET AL: "Compact Watershed and Preemptive SLIC: On Improving Trade-offs of Superpixel Segmentation Algorithms", INTERNATIONAL CONFERENCE ON PATTERN RECOGNITION, IEEE COMPUTER SOCIETY, US, 24 August 2014 (2014-08-24), pages 996-1001, XP032698181, ISSN: 1051-4651, DOI: 10.1109/ICPR.2014.181 [retrieved on 2014-12-04] * the whole document * | 1-11 | TECHNICAL FIELDS SEARCHED (IPC) H04N G06K G06T |

The present search report has been drawn up for all claims

| Place of search | Date of completion of the search | Examiner |
|---|---|---|
| Munich | 19 June 2018 | Cordara, Giovanni |

EPO FORM 1503 03.82 (P04C01)

**EP 3 410 720 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SHI et al.** Photo album compression for cloud storage using local features. *IEEE J. Emerg. Sel. Topics Circuits Syst.,* 2014, vol. 4 (1), 17-28
- Dense correspondence based prediction for image set compression. **ZHANG et al.** IEEE International Conference on Acoustics, Speech and Signal Processing, ICASSP. 2015, 1240-1244
- **ACHANTA et al.** SLIC superpixels compared to state-of-the-art superpixel methods. *IEEE Trans. Pattern Anal. Mach. Intell.,* 2012, vol. 34 (11), 2274-2282
- **ARANDJELOVIC et al.** Three things everyone should know to improve object retrieval. *IEEE Conference on Computer Vision and Pattern Recognition,* 2012

- **A. FISCHLER ; R. C. BOLLES.** Random sample consensus: A paradigm for model fitting with applications to image analysis and automated cartography. *Commun. ACM,* 1981, vol. 24 (6), 381-395
- **A. HARLTEY ; A. ZISSERMAN.** Multiple view geometry in computer vision. Cambridge University Press, 2006
- **DELONG et al.** Fast approximate energy minimization with label costs. *International Journal of Computer Vision,* 2012, vol. 96 (1), 1-27
- **H. N. ISACK ; Y. BOYKOV.** Energy-based geometric multi-model fitting. *International Journal of Computer Vision,* 2012, vol. 97 (2), 123-147
- **HACOHEN et al.** Optimizing color consistency in photo collections. *ACM Trans. Graph.,* 2013, vol. 32 (4), 38